# EUROPEAN PATENT APPLICATION

(11) **EP 0 531 618 A1**
(43) Date of publication of application: **17.03.1993**
(21) Application number: 92107462.1
(22) Date of filing: 30.04.1992
(51) Int. Cl.: C09J 123/02, C09J 123/04

(54) **Cohesive compositions**

(30) Priority: 12.09.1991 US 758620
(71) Applicant: FINDLEY ADHESIVES INC., Wauwatosa Wisconsin 53226-3413 (US)
(72) Inventor: Haeger, Robert J., Hales Corners, WI 53130 (US); Neperud, Michael A., Hubertus, WI 53033 (US)
(74) Representative: von Füner, Alexander, Dr.

(57) **Abstract**

A cohesive cold seal composition which is tack free when cooled to room temperature and will only adhere to itself, and which includes about 60 to about 95 parts by weight of an amorphous polyalphaolefin hydrocarbon, and about 1 to about 30 parts by weight of a crystalline aliphatic hydrocarbon wax, the composition being useful as a cold seal composition for packaging, and related industrial applications.

## Description

The present application is a continuation-in-part of application Serial No. 07/383,378 and which was filed on July 20, 1989, now abandoned.

### 1. Field of the Invention;

The present invention relates to cohesive compositions, and more particularly, it relates to cohesive compositions which melt when heated so that they can be readily coated on or applied to a selected substrate by utilizing conventional manufacturing techniques, and which further are operable, when cooled to room temperature, to bond or seal only to a similarly coated surface or substrate.

### 2. Background of the Invention;

The prior art is replete with examples of cohesive compositions, which will form bonds or otherwise seal to themselves at ambient temperatures. For example, so-called cohesive cold seal compositions are used from time to time in the packaging industry on a wide variety of goods including confectionery and medical devices. Heretofore, such cohesive materials were compounded in a fashion whereby they could be applied with conventional extrusion, spray or other types of application equipment. In addition to the foregoing, the cohesive material noted above has included compositions which will form a substantially coalesced film, when dried, and which further possesses desirable moisture vapor transmission ratios (MVTR) for the desired packaging application. Furthermore, those skilled in the art have recognized that the ideal cohesive material should not bond or seal to itself unless pressures exceeding those required to form a roll are applied so that coated substrates can be wound into rolls without employing release liners.

Commercially available, cohesive, cold seal compositions have included, heretofore, compounds which are water-based, natural rubber based products. While these compounds have operated with varying degrees of success, they have assorted shortcomings which have detracted from their usefulness. For example, some industrial packaging or sealing applications require plasticizer migration resistance to monomeric and polymeric phthalate plasticized vinyl substrates, such as those used in bandage packaging. Moreover, the water-based compositions, discussed above, generally do not form good coalesced films when dried and therefore do not have acceptable MVTR values for other packaging or sealing applications.

In addition to the shortcomings noted above, the prior art cold seal compositions may be employed, from time to time in packaging applications which are performed in combination with, heat activated and/or pressure sensitive adhesives. In the former case, the need for special application equipment for heat activated adhesives adds to the expense of the packaging operation and increases the opportunity for equipment malfunction as by clogging and other similar manufacturing defects. In the latter case, for example, it is usually necessary to use a release liner with the pressure sensitive adhesive to prevent them from adhering to adjoining non-adhesive surfaces before the desired cold seal is made.

Therefore, it would be advantageous to have improved cold seal cohesive compositions that could be handled and applied in a manner similar to hot melt adhesives which can be extruded, sprayed and otherwise applied by a wide variety of methods; and which further do not possess all the shortcomings noted earlier with respect to commercially available cold seal cohesives used heretofore.

### 3. Objects and Summary of the Invention;

It is therefore an object of the present invention to provide novel and improved cold seal cohesive compositions which can be used for packaging and other related applications.

Another object of the present invention is to provide an improved cohesive composition which, when coated on a suitable substrate, permits the substrate to be wound into rolls without using a release liner, the improved cohesive composition only adhering to a similarly coated surface with pressures within a predetermined range and at room temperature .

Another object of the present invention is to provide improved cohesive compositions which contain the following:
(a) about 50 to about 95, and preferably 60 to 90, parts of an amorphous polyalphaolefin hydrocarbon material;
(b) about 1 to about 30, and preferably about 2 to about 20, parts of a crystalline aliphatic hydrocarbon wax; and
(c) about 0 to about 25, and preferably 0 to 20, parts of a compatible organic tackifier.

Another object of the present invention is to provide cohesive compositions which, when combined with an appropriate substrate, provides a dimensionally stable substrate having at least one surface with a coating of the cohesive cold seal composition of about 0.000325 g/cm² and preferably from about 0.00032 to about 0.0098 g/cm² in thickness.

Another object of the present invention is to provide cohesive compositions which are essentially tack free when cold and which will adhere to themselves when sufficient pressure is applied, and which further will not adhere to foreign surfaces as the result of a brief application of a perpendicular force.

Another object of the present invention is to provide cohesive compositions which melt when heated and thus can be applied to substrates with any conventional hot melt adhesive application equipment such as screen printers, hot melt orifice coaters, sprayers or the like, and further may be dissolved in a suitable solvents and applied.

Another object of the present invention is to provide cohesive compositions which form bonds and seals with plastic and/or plastic coated materials which are comparable to those of the presently used water-based natural rubber based cold seal compositions.

Another object of the present invention is to provide cohesive compositions which have better stability and resist to aging in a coated roll, and which further do not yellow or lose performance characteristics as quickly upon aging as do the prior art water-based products.

Another object of the present invention is to provide improved cohesive compositions which form a coalesced film with excellent MVTR properties.

Another object of the present invention is to provide cohesive compositions which may be useful in the construction of tabless diapers. In such construction, two surfaces to be mated are coated with the cohesive compositions of the present invention and the surfaces mated at the time of use to close the diaper. The surfaces coated with the cohesive compositions of the present invention are tack free and thus can be used in a manufacturing environment in which films that are tacky would collect dust and thus become unsuitable.

Another object of the present invention is to provide improved cohesive compositions which are useful in packaging and related operations, and which further are operable to obtain the benefits to be derived from the previous prior art devices and practices while avoiding the detriments individually associated therewith.

Further objects and advantages are to provide cohesive compositions having improved performance characteristics for the purposes intended and which are dependable, durable and fully effective in accomplishing these same purposes.

### 4. Description of the Preferred Embodiment;

In the preferred practice of the invention the cohesive cold seal compositions have the following formula:
(a) about 60 to about 90 parts by weight of an amorphous polyalphaolefin hydrocarbon material selected from the group of polyalphaolefins which are composed of mixtures of polymers including ethylene and propylene, ethylene and butylene, and ethylene, propylene and butylene;
(b) about 2 to about 20 parts by weight of a crystalline aliphatic hydrocarbon wax which is selected from the group of crystalline aliphatic hydrocarbon waxes which are homopolymers of ethylene;
(c) about 2 to about 20 parts of an organic tackifier; and
(d) an effective amount of a stabilizer.

As should be understood, cohesive cold seal compositions are best classified as compositions which exclusively form bonds to themselves at room temperature. While a precise and settled definition of a cohesive cold seal composition has not been used in industrial or laboratory applications, heretofore, for purposes of this application, a substance will be classified as a cohesive composition only if it passes three tests which will be discussed in greater detail hereinafter. Failure to pass any one, or all of the three test, results in the material being classified as a substance other than a cohesive cold seal composition.

Those skilled in the art will readily recognize that end users, heretofore, have employed various adhesive compositions, such as hot melt adhesives, for assorted industrial applications, including packaging and construction of various end products including diapers and the like. For example, hot melt adhesives are frequently used to both bind the non-woven top sheet and filler material to an associated polyethylene back sheet, and to attach an elastic substrate on the leg or waist area of the diaper. As discussed earlier, hot melt adhesives are unsuitable in some industrial applications due, in part, to the temperatures at which these adhesives are applied. As should be understood, hot melt adhesives, as a general matter, form their bonds to a substrate while these materials are hot. Once cooled to room temperature, the ability of a hot melt adhesive to bond to a substrate is substantially dissipated. Furthermore, other adhesives include solvents which form their bonds upon the dissipation of the solvent. These materials may also be unsuitable for particular industrial applications such as packaging food products or the like.

The first experiment, which determines whether a substance is a cold seal, cohesive composition is a block test. In this test, a 20 pound bleached, craft paper having a lacquer release coating on one side, is coated with a .25 mil. thick coating of the substance to be tested. The coated paper is then pressed into contact with a similar non-coated paper or substrate having a lacquer release coating. In this regard, the coated substrate is pressed into contact with the lacquered surface of the non-coated substrate for a period of 17 hours at a temperature of 122°F and at a pressure of 100 psi. Following this test, the two substrates are separated to determine whether the suspected cohesive tears the uncoated substrate. In a successful test, a cohesive will not rend or tear the non-coated substrate.

The second experiment, which determines whether a material is a cold seal cohesive, is the cohesion test. In this second test, two pieces of 20 pound bleached craft paper having a lacquer release coating on one side, are each coated with a .25 mil. thick coating of the substance to be tested. The individually coated surfaces are then pressed into contact, one with the other, for 1 second, at room temperature, and utilizing a pressure in the range of about 3 to about 20 pounds per square inch (PSI). Following the procedure, the two coated papers are pulled apart and the results are recorded. In a successful test, a cohesive cold seal composition will cohesively seal to itself and the papers will tear when force is applied to separate them.

The third experiment, which determines whether a material is a cold seal, cohesive composition, is conducted under approximately the same conditions as the second experiment, except that the coated surface of the 20 pound bleached paper is pressed into contact with various uncoated substrates, such as stainless steel, to determine if the coated substrate will adhere or otherwise cohesively attach itself to the substrate. In a successful test, the coated paper substrate shows no evidence of cohesion to a stainless steel substrate.

Applying the tests, as set forth above to the present cohesive compositions, it should be understood that the compositions of the present invention passes all three tests, that is, it released cleanly in the blocking test; causes tearing of the paper substrates when separated in the cohesion test; and does not adhere, or cohesively attach to stainless steel in the third test. In contrast, hot melt adhesives made in accordance with any of the teachings of patent nos. 4,886,853; 4,857,594; 4,471,086; 4,299,745; 4,568,713; 4,567,223 and 4,826,909 will not truly be classified as cohesive, cold seal compositions because they will not pass all three of the tests noted above. More particularly, hot melt adhesives will pass the first and third tests, but will fail the second test because the second test is performed at room temperature. In this regard, hot melt adhesives will fail the second test because they will not form bonds because they become hard at room temperatures. Similarly, and in the case of hot melt adhesives which have been rendered pressure sensitive, these cannot be classified as cold seal, cohesive compositions because they do not pass all three tests, above. In particular, pressure sensitive, hot melt adhesives fail test one by causing fiber tear, passes test two by strongly adhering to an adjoining similarly coated substrate, and fails test three by strongly adhering to stainless steel.

In practice, a coating of the cohesive cold seal composition is applied with conventional hot melt application equipment to a dimensionally stable substrate such as paper, polymer films and the like. The cohesive, cold seal coating is at least about 0.000325 g/cm² and preferably about 0.00032 to 0.00098 g/cm². The cohesive, cold seal coating, which dries to a tack-free condition, can be activated to form a cold seal cohesive bond by applying the pressures normally used in packaging, e.g., 3 to 100 psi.

In the preferred embodiment, the amorphous polyalphaolefin hydrocarbon materials which can be employed successfully are the substantially homogeneous polymers available from the Rexene Company of Dallas, Texas and which are marketed under the trademark REXTAC. More particularly, the amorphous polyalphaolefin polymers are selected from the group of polyalphaolefin polymers which are composed of mixtures of polymers, including ethylene and propylene; ethylene and butylene; and ethylene, propylene and butylene. Especially useful are those amorphous polyalphaolefins having a softening point of about 200°F to about 295°F, a flash point above 450°F, and a melt viscosity of about 1500 to 8500. Representative polymers available from the Rexene Company and which have performance characteristics, as set forth above, include the materials marketed under the tradenames REXTAC 2280 and 2315, respectively. These polymers are described in further detail in U. S. Patent No. 4,710,563.

Another source of amorphous polyalphaolefin materials which can be used in the present invention are those α-olefin copolymers prepared by a low-pressure process. In this regard, these materials are available under the trademark VESTOPLAST and marketed by Chemische Werke Hüls. Especially preferred are those materials sold under the trademarks VESTOPLAST 608 and VESTOPLAST V3643 and which have melt viscosities at 190°C of approximately 8,000 cP.

In the present cohesive, cold seal compositions, tackifiers which are useful in the cohesive compositions may be selected from a variety of commercially available materials including aliphatic and aromatic hydrocarbon resins, hydrocarbon monomers, rosins, and modified resins. Examples of these commercially available materials include, for example, rosin, hydrogenated rosin, rosin+polyterpene resins, glycerol esters of hydrogenated rosin, coumarone-indene resins, hydrogenated rosin glycerol esters of polymerized rosin, maleic anhydride-modified rosin, rosin derivatives of partial esters of styrene-maleic acid copolymers, low molecular weight polystyrene and homologues thereof, copolymers of styrene and terpene resins, and phenolaldehyde resins. Other classes of tackifiers are also useful, as will be clear from this disclosure, and they are intended to be included in the scope hereof.

In the cohesive cold seal compositions, examples of commercially available tackifiers which may be used with same include those tackifiers which are commercially available from Hercules, Incorporated and which are marketed under the trademarks "Piccopale" 85, "Piccotac" B-BHT, "PICCO" 6070, Piccomer "100, Piccovar" AP63, "Piccoumeronl" 60, "Piccolastic" A-75, "Piccotex" 120, "Piccolyte" A-135, "Piccoflyn" A-100, "Kristalex" 3085, "Foral" 85, and "Staybelite". Examples of other commercially available tackifiers include "Arkon" M-90 from Arakawa Chemicals, "Escorez" 1310 available from Exxon Chemicals, "Wingtac" 95 available from Goodyear Chemicals, and "Zonarez" 7100 and "Zonatac" 105 both available from Arizona chemicals.

The crystalline aliphatic hydrocarbons especially useful in the cohesive, cold seal compositions of the present invention are homopolymers of ethylene (polyethylenes) with a molecular weight of about 500 to about 2,000. Especially preferred are those having a molecular weight of 2,000, and which are marketed under the trademark "POLYWAX 2,000" from Petrolite Corporation of Tulsa, Oklahoma.

In addition to the other components, it is desirable for the cohesive cold seal compositions of the present invention to contain about 0.1 percent to about 1.5 percent, by weight, and preferably about 0.25 percent to 1.0 percent by weight, of one or more stabilizers and antioxidants. Such stabilizers include, for example, tris(di-t-butyl-p-hydroxybenzyl)-trimethylbenzene (Ionox 220 and 330), 6-di(t-butyl)-p-cresol (Dalpac 4C2), alkylated bisphenol (Naugawhite), zinc dibutyl dithiocarbamate (Butyl Zimate), 4,4'-methylene bis(2,6-di-tert-butylphenol) (Ethyl 702), tetrakis [methylene(3,5-di-tert-butyl-4-hydroxyhydrocinnamate)methane](Irganox 1010), and dilauryl 3,3'-thiodipro-pionate (Plastanox DLTDP).

The practice of the present invention is further illustrated by the examples which follow, and in which all parts are expressed as parts by weight.

### Example 1

A cohesive, cold seal composition of the present invention was prepared by the so-called hot-melt technique, and wherein all of the ingredients were heated and mixed together until each of the ingredients were dissolved or suitably dispersed in the mixture.

The cohesive, cold seal composition of the present example contained the following materials:

| | |
|---|---|
| (a) amorphous polyalphaolefin hydrocarbon (REXTAC 2280) | 40 parts |
| (b) amorphous polyalphaolefin hydrocarbon (REXTAC 2315) | 40 parts |
| (c) organic tackifier (WINGTAC 95) | 10 parts |
| (d) polyethylene homopolymer (POLYWAX 2,000) | 10 parts |
| (e) stabilizer (IRGANOX 1010) | 0.5 parts |

The cohesive, cold seal composition was allowed to cool to room temperature and then was melted and applied utilizing conventional hot melt applicator equipment as a coating on a paper substrate. The film of the cohesive composition that coalesced on the paper substrate was tack free at room temperature. Further, the cohesive composition formed a bond with another paper substrate which was coated with the same cohesive composition with a minimum of pressure such that upon separation of the two paper substrates they tore one from the other, rather than separating cleanly. Moreover, the same composition released cleanly under the conditions of test two and failed to cohere or otherwise stick to stainless steel under the conditions of test three.

### Example 2

The procedure of Example 1 was repeated to prepare a cohesive composition which contained the following materials:

| | |
|---|---|
| (a) amorphous polyalphaolefin hydrocarbon (VESTOPLAST 608) | 15 parts |
| (b) amorphous polyalphaolefin hydrocarbon (VESTOPLAST V3643) | 75 parts |
| (c) polyethylene homopolymer (POLYWAX 2,000) | 10 parts |
| (d) stabilizer (IRGANOX 1010) | 0.5 parts |

The cohesive, cold seal composition was applied as a coating to a paper substrate and was permitted to dry whereupon it was determined that it was tack free. In addition, the coated paper was found to cohere, with a minimum of pressure, when applied to a similarly coated surface of a second paper substrate. In this regard, the two paper substrates tore when force was applied to separate them. Further, this same composition passed the conditions of tests one and three discussed earlier.

It will be apparent to those skilled in the art that the foregoing examples are merely for illustration and that a number of changes can be made in the same formulation without departing from the spirit of the invention. Therefore, the invention is only to be limited by the claims.

## Claims

1. A cohesive cold seal composition which may be applied to a substrate by employing conventional hot melt application equipment, but which, when cooled to room temperature, will only form a bond to itself, the cohesive cold seal composition comprising:
about 60 to about 95 parts by weight of an amorphous polyalphaolefin hydrocarbon selected from the group of polyalphaolefin polymers which are composed of mixtures of polymers including ethylene and propylene, ethylene and butylene, and ethylene, propylene and butylene;
about 2 to about 20 parts by weight of a crystalline aliphatic hydrocarbon wax which is selected from the group of aliphatic hydrocarbon waxes which are homopolymers of ethylene; and
about 0 to about 25 parts by weight of a compatible organic tackifier.

2. A cohesive cold seal composition as claimed in Claim 1, and wherein the amorphous polyalphaolefin has a softening point of about 200°F to about 295°F, a flash point of about 450°F and a melt viscosity of about 1500 to about 8500 cP at a temperature of about 190°C.

3. A cohesive cold seal composition as claimed in Claims 1 or 2, and wherein the homopolymer of ethylene is chosen from the group of homopolymer of ethylene which have molecular weights of 500 to about 2000.

4. A cohesive cold seal composition as claimed in one of the preceding claims, and wherein the cold seal composition further includes a compatible antioxidant.
